# EUROPEAN PATENT SPECIFICATION

(11) **EP 1 279 310 B1**
(45) Date of publication and mention of the grant of the patent: **23.07.2008**
(21) Application number: 01924061.3
(22) Date of filing: 24.04.2001
(51) Int. Cl.: H04Q 7/38, H04L 9/08

(54) **ARRANGEMENT AND METHOD FOR SUBSCRIPTION TO A CELL BROADCAST SERVICE**
ANORDNUNG UND VERFAHREN ZUM TEILNEHMEN AN EINEM ZELLEN-RUNDSENDEDIENST
SYSTEME ET PROCEDE D'ABONNEMENT A UN SERVICE DE DIFFUSION CELLULAIRE

(30) Priority: 27.04.2000 SE 0001526
(43) Date of publication of application: 29.01.2003
(73) Proprietor: TELIASONERA AB, 106 63 Stockholm (SE)
(72) Inventor: EMILSSON, Stellan, S-655 94 Karlstad (SE); BLOMKVIST, Hakan, S-653 50 Karlstad (SE); GUSTAFSSON, Jan, S-653 50 Karlstad (SE); ERIKSSON, Jonas, S-652 22 Karlstad (SE)
(74) Representative: Hopfgarten, Nils
(86) International application number: PCT/SE2001/000873
(87) International publication number: WO 2001/082645

(56) References cited:
- EP-A2- 0 532 231
- WO-A1-97/41654
- WO-A1-98/19479
- WO-A1-99/45732
- WO-A1-99/57927
- WO-A1-99/66670
- US-A- 6 097 949

## Description

### Field of the invention

The present invention relates to an arrangement and a method according to the pre-characterizing portions of claims 1 and 7 respectively, i.e. to address data which are transmitted on a carrier frequency which is broadcast, a so called broadcast carrier, to users within specific groups or regions. More exactly is related to an arrangement and a method at a wireless telecommunication system which makes it possible to charge for and offer closed user groups services which are based on GSMs Cell Broadcast carrier service.

### Technical background

Wireless telecommunication and data communication systems which utilize radio as transmission medium have as a rule a cellular structure. In such cellular radio communication systems a fixed network is arranged with a plurality of transmitter and receiver stations, so called base stations, and exchanges, control units and operator stations arranged for operation of the system. The network is fixed in the sense that the included units are stationary, and that they as a rule are connected to each other by cable/wire. The base stations are the end terminals of the fixed network, which are arranged for communication via radio with mobile stations within the coverage areas of the base stations. The area within which a base station is arranged to provide coverage for radio communication with mobile stations is called cell, and the base stations are carefully placed/located in the terrain so that their respective cells overlap each other. The size of the cells is depending on the load of available radio spectrum, since the bandwidth is limited. For that reason the size of the cell is in principle decided by call frequency per area unit, and can vary from some hundred meters in diameter in urban environment, to several kilometers in rural districts.

There are several different technologies for division of communication channels, for use at communication between base station and mobile station. The channels can for instance be frequency divided according to FDMA (Frequency Division Multiple Access), time divided according to TDMA (Time Division Multiple Access), or represented by codes according to CDMA (Code Division Multiple Access).

GSM (Global System for Mobile communication) is a radio communication system where channels preferably are divided according to TDMA, that is, different users can utilize the same carrier frequency at the same time by division of the radio resource in time slots. When a call is established in GSM, the involved mobile station and the base station in the cell where the mobile station is, first communicate over a carrier frequency for control channels. This carrier frequency is common to all mobile stations in the cell of current interest, and includes a plurality of different channels which the network for instance uses for transmission of broadcast information to its subscribers, and for paging of subscribers in case of incoming calls to them. When the fixed network has found the position of and established contact with the mobile station of current interest, the base station of current interest and the mobile station are allocated a communication channel, or, more exactly, two; one for downlink from base station to mobile station, and one for uplink in opposite direction. The communication, that is the conversation itself, is after that executed on the dedicated traffic channel, which is not shared by any other users within an area which is sufficiently large to guarantee that the communication of different users with the fixed network does not interfere on the radio channel.

In GSM the common carrier with continuous and even signal strength is used by the base stations, and is for that reason also utilized for signal strength measuring of mobile stations with the aim to find suitable candidates for handover, that is, transfer of communication between base stations. The common carrier also can include channels intended for directed transmission of text messages, so called SMS (Short Message Service). As the name implies, SMS is a service to transmit short text messages direct to a GSM mobile telephone. This can be done without any extra equipment; a modern mobile telephone is all that is needed. There is space for maximally 160 characters or 140 byte in such a message. One differentiates between SMS-MT (mobile terminated) which is transmitted to a mobile telephone, and SMS-MO (mobile originated) which is transmitted from the telephone. Practically all GSM-telephones can receive SMS. Transmit SMS can practically almost all new GSM-telephones. What is needed is that one has programmed in the telephone number of/to the operator's message center (SMSC, SMS Center). If the telephone is switched off, the message can of course not be delivered. Then the message is held in the system for a few days, different in different networks, and is transmitted when the telephone later is switched on. The one who transmits the message actually has no confirmation of that the message has been received. One then always pays for the message irrespective of if it has reached its destination or not.

Some operators offer to their customers to derive information to the own GSM-telephone by means of SMS. The subscriber then transmits a specific message to one in advance determined number. He/she then will, after a short while, have an SMS in return which contains the requested information. It can for instance be stock exchange quotations, weather forcasts, train or flight schedules, rates of exchange, sports news, and a lot of other things.

Another procedure to transmit text messages to mobile stations is to utilize a so called Cell Broadcast service. The idea of Cell Broadcast is that the operator transmits an SMS text message broadcast to all mobiles which are in the same area, one or more cells, and consequently not to a specific receiver as with a normal text message. The messages can for instance contain a local weather forecast, road report, or advertisement for the local restaurant. By a cell-info function arranged in the mobile station, the subscriber then can select to receive Cell Broadcast-messages or not. In more modern mobiles it is also possible to limit the information that shall be received by selecting among different classes of information, for instance only road reports and no advertisement. Cell Broadcast makes transmission of up to 93 characters possible, and operates in "background mode", that is, it is only received by mobile stations in idle mode. A new message can be transmitted every two seconds.

WO 98/19479 describes a method for providing location information for services which are dependent on the geographical location. Geographical location information is broadcast on a cell broadcast channel of the base stations to the mobile stations. The mobile station inserts the broadcast location information into a service request to a service provider. The service provider then sends a service announcement to the mobile station, selected according to the location information.

WO 99/66670 describes a technique for broadcast service access control in a cellular radio communication system. This technique can be used to provide controllable access to broadcast information services. Subscriber specific data are then encoded in the fixed network by a service key. The encoded data are transmitted on a broadcast carrier, and received encoded subscriber specific data are decoded in the subscribing user's equipment.

There is today, however, no way to charge the mobile telephone subscribers for the utilization of services which are based on GMS's Cell Broadcast carrier service. Nor does the possibility exist to offer to closed user groups the, from a transmission point of view, resource saving broadcast service. As a consequence of this it is the operator or the service provider who has to bear the expenses of operating the service referred to and to transmit the information to the user. For new possible services this fact may be a problem, since many companies or organizations do not want to take these costs without having something back in form of earnings from the users. Even if it with existing technology is possible to subscribers to automatically sort out among incoming cell broadcast messages by means of the above mentioned cell-info functionality, and then possible for the operator to reach the subscribers who themselves select to receive the information, it is not possible for the operator to transmit data by cell broadcast directed to selected subscribers and at the same time prevent other subscribers from acquainting themselves with the data.

It consequently is an aim of the present invention to provide an arrangement and a method for subscription to Cell Broadcast services in a radio communication system, and according to one aspect of this aim to solve the above mentioned problem with known technology.

### Summary of the invention

This aim is oblined by an arrangement according to claim 1 and a method according to claim 7.

The present invention accordingly provides an arrangement for subscription to a broadcast service in a cellular radio communication system, which system includes a fixed network with base stations. Said base stations are each arranged to transmit data on a broadcast carrier within a cell for all mobile stations in said cell to receive. A coding device is arranged in the fixed network, adapted to encode of subscriber specific data by a key to a code. A data transmission device is arranged in the fixed network, adapted to broadcast transmission of subscriber specific data which have been encoded by said coding device, on one data channel on said broadcast carrier arranged for Cell Broadcast service. Mobile stations which have entitlement to receive the subscriber specific data, that is mobile stations belonging to subscribers of the cell broadcast service, include decoding devices. This decoding device is adapted to decode said encoded subscriber specific data by said key to a code, which is symmetric with the key which has been used for the encoding of the data in the fixed network.

The invention thus also relates to a method for subscription to a broadcast service in a cellular radio communication system as above. Subscriber specific data are then encoded in the fixed network by a key to a code. The encoded subscriber specific data are after that transmitted broadcast on one for Cell Broadcast service arranged data channel on said broadcast carrier arranged for Cell Broadcast service. The transmitted encoded subscriber specific data can be received by all subscribers in the cells where the data are transmitted, but decoded only in one subscriber's mobile station by a key which is symmetric with the key which was used for the encoding in the fixed network.

### Brief description of the drawings

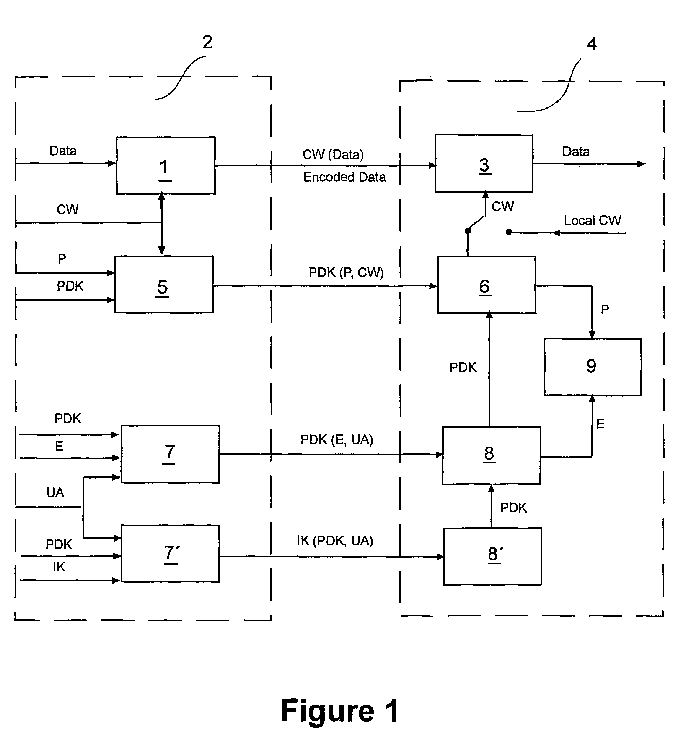

The invention is described in detail below with reference to the.only figure, at which
Figure 1 schematically shows the data flow between the fixed network and a mobile station in a preferred embodiment of the invention.

### Detailed description of preferred embodiments

The invention is based on that one codes information which belongs to services to which one subscribes, and pays for, or which only certain groups shall have possibility to listen to. The users who are authorized to receive and decode this information have keys and belonging algorithm to be able to decode the information. The algorithm for decoding is either in the mobile telephone itself, that is the mobile station, in the SIM-card, or in a terminal which can be connected to the mobile telephone.

Because the invention is based on GSM Cell Broadcast carrier service, or just any other mobile telephone standard which can manage broadcast information to mobile telephones, information of current interest can be limited to a geographical area. This can be selected quite freely and can be varied from a single cell up to an operator's whole network (all cells). It consequently will be possible to direct one's broadcast information to a specific geographical area, where the information is relevant and of current interest, at the same time as one directs the information only to specific receivers in this geographical area.

The invention also makes it possible to buy services during a limited period of time, for instance per day, that is when one actually has a need for just that service. Ordering for the service then can be done by transmitting a SMS-message to the server which manages the service. The server registers the A-number, which is used at debiting, and transmits entitlement information in return.

Updating of keys, at long-term subscriptions to services can be done via GSM's radio interface, SMS or Cell Broadcast, from the operator to the users in a way similar to that which is used at satellite-TV.

The choice of coding technology is of secondary importance to the system. For instance can symmetric keys be used. They provide lower performance demands at the decoding. The management of keys will be simple because all receivers who have ordered a specific service will use the same key. The users, however; do not have possibility to read their key in plain text, and by that cannot spread it to others. It should be emphasized that only certain types of Cell Broadcast messages, for instance pay and subscription services, and closed user groups, are encoded. Other open Cell Broadcast messages are transmitted not coded.

An almost infinite number of unique user groups can be created. Each member in a user group will have the same symmetric key. Each user group can in this way only read messages directed to the group. An application in MS checks if MS has succeeded in decoding the messages. This can be realized by a so called Message Authentication Code (MAC) being transmitted together with the message. MS then tries, after decoding, to calculate MAC for the message and compares this with the in the message included MAC. If these correspond with each other, the decoding has been successful and the message is directed to the group to which I belong. Otherwise MS rejects the message.

One example of coding technology and managing of encryption keys according to the present invention is described in Figure 1. Other variants are of course possible, and it is not the coding technology as such that is decisive of the patent, but the principle to code individual channels.

Some terms which are relevant to the in the figure described embodiment are:
- Data: Payload information directed to user, subscriber.
- CW: Control Word. Key (symmetric) used for encoding and decoding data.
- ECM: Entitlement Control Message. Entitlement information for a service. Can for instance be a new CW.
- EMM: Entitlement Management Message. Messages which are used to update or load down subscriber information or keys which concern specific users (individual or groups).
- PDK: Service Management Key. Owned by a content provider and is associated to a specific service and is used to encrypt transmission of subscriber information (E) or keys for the service (CW).
- IK: Issuer Key. Key at the highest level. Owned by the network operator (Telia) and is used to load down new keys for a new service (content provider) via the radio interface. Can also be used to delete keys for a service.
- UA: Address. Address to a specific user or to a group of users.
- P: Information about how CW shall be used.
- E: Entitlement information for a specific service and a specific user or group of users.

Encoding in an encoder 1 in the fixed network 2, and decoding, in a decoder 3 in a subscriber's mobile station 4, of the payload information (data) is done by means of CW, Control Word. Change of CW can be made by the content provider for the service of current interest by a new CW being transmitted on the ECM-channel, encrypted by an ECM encryption device 5 with PDK (Service Management Key). ECM is the channel for "Entitlement Control Messages". In addition to new CW-keys here information, P, regarding the use of CW can be transmitted. Messages on ECM are directed to all subscribers to the service, and are decrypted by an ECM decryption device 6 in respective mobile station 4.

The EMM-channel (Entitlement Management Messages) can be used to change PDK for a certain service, or load down new keys for a new service. The systems manages parallel keys and Control Words for different services. The channel is also used to load down entitlement information (E, Customer Entitlement) for a subscriber or a group of subscribers. Example of such information is the time of validity for a subscription. Messages on the channel are encrypted by EMM-encryption device 7,7', different or the same for E and PDK, and are directed to a specific user or group of users by means of the address UA. EMM decryption device 8,8', different or the same for E and PDK, are arranged in the mobile station 4 for decryption of E respective PDK.

The arrangement for subscription to a broadcast service according to the present invention consequently includes encoding device 1 adapted to encoding in the fixed network 2 of subscriber specific data by a symmetric key to a code CW, data transmission device adapted to transmission of encoded subscriber specific data from the fixed network on a data channel on a cell broadcast carrier, and decoding device 3, adapted to decoding of encoded subscriber specific data by said symmetric key to a code in a mobile station 4 belonging to a subscriber to a broadcast service. In one preferred embodiment of the invention, said data transmission device is adapted to transmission of encoded subscriber specific data in in advance determined cells, depending on said subscription to the broadcast service.

The arrangement includes first encryption device 5 adapted to encryption of keys to codes by a first encryption key PDK in the fixed network, first transmission device for control data, adapted to transmission of encrypted keys (to codes) from the fixed network on a first control data channel ECM on said broadcast carrier, and first decryption device 6 adapted to decryption of encrypted keys in the subscriber's mobile station. Said first encryption device is preferably adapted to encryption of information P about how said symmetric key shall be used, and that said first transmission device for control data is preferably adapted to transmission of the encrypted information about how said symmetric key (to a code) shall be used on the first control data channel.

Further, the arrangement includes a second encryption device 7 adapted to encryption by the first encryption key of entitlement information E in the fixed network, second transmission device for control data, adapted to transmission of encrypted entitlement information from the fixed network on a second control data channel on said broadcast carrier, and second decryption device 8 adapted to decryption of encrypted entitlement information in the subscriber's mobile station. Further, a third encryption device 7' is included, adapted to encryption of said first encryption key PDK by a second encryption key IK, third transmission device for control data, adapted to transmission of encrypted first encryption key from the fixed network on a third control data channel on said broadcast carrier, and third decryption device 8', adapted to decryption of said first encrypted encryption key in the subscriber's mobile station. Said second and third transmission devices are preferably arranged to transmit address information about mobile stations of receiving subscribers.

An information storing device 9 is preferably arranged in the subscriber's mobile station, adapted to storing of said information about how said symmetric key to a code shall be used, and to said entitlement information. Further is preferably included a device for storing of key to a code (not shown), arranged in the subscriber's mobile station, adapted to storing of said key, and an encryption key storing device (not shown), arranged in the subscriber's mobile station, adapted to storing of said first encryption key.

The method for subscription to a broadcast service according to the present invention includes the steps to encode subscriber specific data in the fixed network by a symmetric key to a code; transmit the encoded subscriber specific data on a data channel on said broadcast carrier; and to decode said encoded subscriber specific data in a subscriber's mobile station by said symmetric key to a code. Further is preferably included the step to transmit said encoded subscriber specific data in in advance determined cells depending on said subscription to the broadcast service.

The method according to the invention further includes the steps to encrypt keys to codes by a first encryption key in the fixed network; transmit encrypted keys to codes from the fixed network on a first control data channel on said broadcast carrier; and to decrypt encrypted keys to codes in the subscriber's mobile station.

Fruther, the method includes the steps to encrypt information about how said symmetric key to a code shall be used; transmit said encrypted information about how said symmetric key to a code shall be used on said first control data channel; encrypt entitlement information by the first encryption key in the fixed network; transmit encrypted entitlement information from the fixed network on a second control data channel on said broadcast carrier; and to decrypt said encrypted entitlement information in the subscriber's mobile station, as well as the steps to encrypt said first encryption key by a second encryption key; transmit said encrypted first encryption key from the fixed network on a third control data channel on said broadcast carrier; and to decrypt said first encrypted encryption key in the subscriber's mobile station.

Preferably the method also includes the steps to transmit from the fixed network address information about mobile stations of receiving subscribers; store said information about how said symmetric key to a code shall be used, and said entitlement information in the subscriber's mobile station; store said key to a code in the subscriber's mobile station; and to store said first encryption key in the subscriber's mobile station.

The invention consequently describes a general method to code information which is transmitted on GSM Cell Broadcast carrier service and which, in addition, can be directed to geographical area which can be selected.

Examples of situations when the arrangement and the method according to the present invention can be utilized are:
- A service provider can charge customers to whom one for instance distributes road and traffic information. The information can be directed to those road-users who are on a specific section of a road. Other road-users need not be troubled.
- Order for service during a limited period of time when the service is of interest, for instance tourist information in Stockholm during a week-end's stay. The service can for instance be included in the "Stockholm Card", by the A-number being registered when the card is bought.
- Police or emergency service can transmit confidential information to their units without the public having possibility to acquaint themselves with the information. The information can be directed to the units or persons who are in specific geographical areas, for instance a specific city (town) district. Other units need not be bothered.
- When one wants to offer for instance to a company an own broadcast service for their employees. Each company in a community can be offered to subscribe to an own user group.

By the invention it is possible to very fast, and at the same time with sparing of resources and with encoding possibility, transmit information to a lot of users, in principle an unlimited number. It will, in addition, be possible to charge for the information by allowing the users to subscribe to the service. In addition to this, the information can be directed to the geographical areas where it is relevant, by only being transmitted on the cells in the mobile telephone system which cover the geographical area of current interest. This results in a flexibility and variability which is unique.

The invention is only limited by the enclosed patent claims.

## Claims

1. Arrangement for subscription to a broadcast service in a cellular radio communication system, which system includes a fixed network (2) with base stations, where a base station is arranged to transmit data on a broadcast carrier within a cell, for all mobile stations (4) in said cell to receive, including
- an encoding device (1) adapted for encoding in the fixed network of subscriber specific data by a symmetric key to a code (CW);
- a decoding device (3) adapted for decoding of encoded subscriber specific data by said symmetric key in a mobile station belonging to a subscriber of said broadcast service, and a data transmission device adapted for transmission of encoded subscriber specific data from the fixed network in selective cells on a data channel on said broadcast carrier, **characterized in that** said data transmission device is arranged to transmit encoded subscriber specific data only in the cells which cover a geographical area in which the data is relevant, **in that**
- a first encryption device (5) is adapted to encrypt keys to codes by a first encryption key (PDK) in the fixed network; **in that**
- a first transmission device for control data is adapted for transmission of encrypted keys from the fixed network (2) on a first control data channel on said broadcast carrier; **in that**
- a first decryption device (6) is adapted to decrypt encrypted keys in the subscriber's mobile station (4), **in that** said first encryption device (5) is adapted to encrypt information (P) about how said encrypted symmetric key shall be used, **in that** said first transmission device for control data is adapted for transmission of the encrypted information about how said encrypted symmetric key shall be used on the first control data channel, **in that**
- a second encryption device (7) is adapted to encrypt by the first encryption key of entitlement information (E) in the fixed network; **in that**
- a second transmission device for control data is adapted for transmission of encrypted entitlement information from the fixed network on a second control data channel on said broadcast carrier; **in that**
- a second decryption device (8) is adapted to decrypt encrypted entitlement information in the subscriber's mobile station, **in that**
- a third encryption device (7') is adapted to encrypt said first encryption key by a second encryption key (IK); **in that**
- a third transmission device for control data is adapted for transmission of said encrypted first encryption key from the fixed network on a third control data channel on said broadcast carrier; and **in that**
- a third decryption device (8') is adapted to decrypt said first encrypted encryption key in the subscriber's mobile station.

2. Arrangement as claimed in claim 1, **characterized in that** said data transmission device is adapted to transmission of encoded subscriber specific data only in cells which are determined in advance by said subscription to the broadcast service.

3. Arrangement as claimed in claim 1, **characterized in that** said second and third transmission devices are arranged to transmit address information (UA) about the mobile stations of receiving subscribers.

4. Arrangement as claimed in claim 1 or 3, **characterized by** an information storing device (9) arranged in the subscriber's mobile stations (4) adapted to store said information about how said symmetric key shall be used, and said entitlement information.

5. Arrangement as claimed in claim 4, **characterized by** a storing device (9), arranged in the subscriber's mobile station (4), adapted to store said key.

6. Arrangement as claimed in claim 5, **characterized by** an encryption key storing device, arranged in the subscriber's mobile station (4) adapted to store said first encryption key.

7. Method for subscription of a broadcast service in a cellular radio communication system, in which system a fixed network (2) includes base stations, and a base station transmits data on a broadcast carrier within a cell, which data are received by all mobile stations (4) in said cell, wherein
- subscriber specific data are encoded (1) in the fixed network by a symmetric key to a code (CW);
- decode (3) said encoded subscriber specific data in subscriber's mobile station by said symmetric key to a code,
**characterized by** the steps to:
- transmit the encoded subscriber specific data on a data channel on said broadcast carrier only in the cells which cover a geographical area in which the data are relevant:
- encrypt (ECM) keys to codes by a first encryption key (PDK) in the fixed network (2)-;
- transmit encrypted keys from the fixed network on a first control data channel on said broadcast carrier;
- decrypt encrypted keys (6) in the subscriber's mobile station (4);
- encrypt (ECM) information (P) about how said symmetric key shall be used;
- transmit said encrypted information about how said symmetric key shall be used on said first control data channel;
- encrypt (EMM) entitlement information (E) by the first encryption key in the fixed network;
- transmit encrypted entitlement information from the fixed network on a second control data channel on said broadcast carrier;
- decrypt (EMM) said encrypted entitlement information in the subscriber's mobile station;
- encrypt (EMM) said first encryption key by a second encryption key (IK);
- transmit said encrypted first encryption key from the fixed network on a third control data channel on said broadcast carrier; and to
- decrypt (EMM) said first encrypted encryption key in the subscriber's mobile station.

8. Method as claimed in claim 7,
**characterized in**, to:
- transmit said encoded subscriber specific data only in cells which are determined in advance by said subscription to the broadcast service.

9. Method as claimed in claim 7,
**characterized by** the step to:
- transmit from the fixed network address information (UA) about the mobile stations (4) of receiving subscribers.

10. Method as claimed in claim 7 or 9,
**characterized by** the step to:
- store (9) said information about how said symmetric key shall be used, and said entitlement information in the subscriber's mobile station (4).

11. Method as claimed in claim 10,
**characterized by** the step to:
- store said key in the subscriber's mobile station.

12. Method as claimed in claim 11,
**characterized by** the step to :
- store said first encryption key in the subscriber's mobile station (4).

## Patentansprüche

1. Anordnung für Teilnahme an einem Rundsendedienst in einem zellularen Funkkommunikationssystem, welches System ein festes Netz (2) mit Basisstationen einschließt, wo eine Basisstation dazu ausgebildet ist, Daten auf einem Rundsendeträger innerhalb einer Zelle zu übertragen, die durch alle mobilen Stationen (4) in der Zelle empfangen werden sollen, die einschließt:
- eine Codiereinrichtung (1), die dazu ausgebildet ist, im festen Netz Daten durch einen symmetrischen Schlüssel zu einem Code (CW) zu codieren;
- eine Decodiereinrichtung (3), die dazu ausgebildet ist, codierte teilnehmerspezifische Daten durch den symmetrischen Schlüssel in einer mobilen Station zu decodieren, die zu einem Teilnehmer des Rundsendedienstes gehört, und eine Datenübertragungseinrichtung, die zum Übertragen von codierten teilnehmerspezifischen Daten von dem festen Netz in selektiven Zellen auf einem Datenkanal auf dem Rundsendeträger ausgebildet ist, **dadurch gekennzeichnet, dass** die Datenübertragungseinrichtung dazu ausgebildet ist, codierte teilnehmerspezifische Daten nur in den Zellen zu übertragen, die ein Gebiet abdecken, in dem die Daten relevant sind, dass
- eine erste Verschlüsselungseinrichtung (5), dazu ausgebildet ist, Schlüssel zu Codes durch einen ersten Verschlüsselungsschlüssel (PDK) im festen Netz zu verschlüsseln; dass
- eine erste Übertragungseinrichtung für Steuerdaten zum Übertragen von verschlüsselten Schlüsseln von dem festen Netz (2) auf einem ersten Steuerdatenkanal auf dem Rundsendeträger ausgebildet ist; dass
- eine erste Entschlüsselungseinrichtung (6) dazu ausgebildet ist, verschlüsselte Schlüssel in der mobilen Station (4) des Teilnehmers zu entschlüsseln,
dass die erste Verschlüsselungseinrichtung (5) dazu ausgebildet ist, Informationen (P) darüber zu verschlüsseln, wie der verschlüsselte symmetrische Schlüssel benutzt werden soll, dass die erste Übertragungseinrichtung für Steuerdaten für Übertragung der verschlüsselten Information darüber ausgebildet ist, wie der verschlüsselte sym-Schlüssel auf dem ersten Steuerdatenkanal benutzt werden soll, dass
- eine zweite Verschlüsselungseinrichtung (7) dazu ausgebildet ist, durch den ersten Verschlüsselungsschlüssel Berechtigungsinformation (E) in dem festen Netz zu verschlüsseln; dass
- eine zweite Übertragungseinrichtung für Steuerdaten für Übertragung von verschlüsselter Berechtigungsinformation von dem festen Netzwerk auf einem zweiten Steuerdatenkanal auf dem Rundsendeträger ausgebildet ist; dass
- eine zweite Entschlüsselungseinrichtung (8) dazu ausgebildet ist, verschlüsselte Berechtigungsinformation in der mobilen Station des Teilnehmers zu entschlüsseln, dass
- eine dritte Verschlüsselungseinrichtung (7') dazu ausgebildet ist, den ersten Verschlüsselungsschlüssel durch einen zweiten Verschlüsselungsschlüssel (IK) zu verschlüsseln; dass
- eine dritte Übertragungseinrichtung für Steuerdaten für Übertragung des verschlüsselten ersten Verschlüsselungsschlüssels von dem festen Netz auf einem dritten Steuerdatenkanal auf dem Rundsendeträger ausgebildet ist; und dass
- eine dritte Entschlüsselungseinrichtung (8') dazu ausgebildet ist, den ersten verschlüsselten Verschlüsselungsschlüssel in der mobilen Station des Teilnehmers zu entschlüsseln,

2. Anordnung nach Anspruch 1, **dadurch gekennzeichnet, dass** die Datenübertragungseinrichtung für Übertragung von codierten teilnehmerspezifischen Daten nur in Zellen ausgebildet ist, die vorher durch die Teilnahme an dem Rundsendedienst bestimmt sind.

3. Anordnung nach Anspruch 1, **dadurch gekennzeichnet, dass** die zweiten und dritten Übertragungseinrichtungen dazu ausgebildet ist, Adressinformation (UA) über die mobilen Stationen von empfangenden Teilnehmern zu übertragen.

4. Anordnung nach Anspruch 1 oder 3, **gekennzeichnet durch** eine Informationsspeichereinrichtung (9), die in der mobilen Station (4) des Teilnehmers angeordnet ist, die dazu ausgebildet ist, die Information, wie der symmetrische Schlüssel benutzt werden soll, und die Berechtigungsinformation zu speichern.

5. Anordnung nach Anspruch 4, **gekennzeichnet durch** eine Speichereinrichtung (9), die in der mobilen Station (4) des Teilnehmers angeordnet ist, die dazu ausgebildet ist, den Schlüssel zu speichern.

6. Anordnung nach Anspruch 5, **gekennzeichnet durch** eine Verschlüsselungsschlüsselspeichereinriohtung, die in der mobilen Station (4) des Teilnehmers angeordnet ist und dazu ausgebildet ist, den ersten Verschlüsselungsschlüssel zu speichern.

7. Verfahren zum Teilnehmen an einem Rundsendedienst in einem zellularen Funkkommunikationssystem, in welchem System ein festes Netz (2) Basisstationen einschließt und in dem eine Basisstation Daten auf einem Rundsendeträger innerhalb einer Zelle überträgt, welche Daten durch alle mobilen Stationen (4) in der Zelle empfangen werden, wobei
- teilnehmerspezifische Daten in dem festen Netz durch einen symmetrischen Schlüssel zu einem Code (CW) codiert werden (1);
- decodiere (3) die codierten teilnehmerspezifischen Daten in einer mobilen Station eines Teilnehmers durch den symmetrischen Schlüssel in einen Code,
**gekennzeichnet durch** die Schritte
- die codierten teilnehmerspexifischen Daten auf einem Datenkanal auf dem Rundsendeträger nur in den Zellen zu übertragen die ein geografisches Gebiet abdecken, in dem die Zellen relevant sind.
- Schlüssel in Codes **durch** einen ersten Verschlüsselungsschlüssel (PDK) in dem festen Netz (2) zu verschlüsseln (ECM),
- verschlüsselte Schlüssel von dem festen Netz auf einem ersten Steuerdatenkanal auf dem Rundsendeträger zu senden;
- verschlüsselte Schlüssel (6) in den mobilen Stationen (4) des Teilnehmers zu entschlüsseln;
- Information (P) darüber zu verschlüsseln (ECU), wie der symmetrische Schlüssel benutzt werden soll;
- die verschlüsselte Information darüber, wie der symmetrische Schlüssel benutzt werden soll, auf dem ersten Steuerdatenkanal zu übertragen;
- Berechtigungsinformation (E) **durch** den ersten Verschlüsselungsschlüssel in dem festen Netz zu verschlüsseln (EMM); 1
- verschlüsselte Berechtigungsinformation von dem festen Netz auf einem zweiten Steuerdatenkanal auf dem Rundsendeträger zu übertragen;
- die verschlüsselte Serechtigungsinformation in der mobilen Station des Teilnehmers zu entschlüsseln (EMM);
- den ersten Verschlüsselungsschlüssel **durch** einen zweiten Verschlüsselungsschlüssel (IK) zu verschlüsseln (EMM);
- den verschlüsselten ersten Verschlüsselungsschlüssel von dem festen Netz auf einem dritten Steuerdatenkanal auf dem Rundsendeträger zu übertragen; und
- den ersten verschlüsselten Verschlüsselungsschlüssel in der mobilen Station des Teilnehmers zu entschlüsseln (EMM).

8. Verfahren nach Anspruch 7, **dadurch gekennzeichnet**,
- die codierten teilnehmerspezifischen Daten nur in Zellen zu übertragen, die vorher durch die Teilnahme am Rundsendedienst bestimmt sind.

9. Verfahren nach Anspruch 7, **gekennzeichnet durch** den Schritt
- von dem festen Netz Adressinformation (UA) über die mobilen Stationen (4) von empfangenden Teilnehmern zu übertragen.

10. Verfahren nach Anspruch 7 oder 9, **gekennzeichnet durch** den Schritt
- die Information darüber, wie der symmetrische Schlüssel benutzt werden soll, und die Berechtigungsinformation in der mobilen Station (4) des Teilnehmers zu speichern (9).

11. Verfahren nach Anspruch 10,
**gekennzeichnet durch** den Schritt:
- den Schlüssel in der mobilen Station des Teilnehmers zu speichern.

12. Verfahren nach Anspruch 11,
**gekennzeichnet durch** den Schritt:
- den ersten Verschlüsselungsschlüssel in der mobilen Station (4) des Teilnehmers zu speichern.

## Revendications

1. Agencement d'abonnement à un service de diffusion dans un système de radiocommunication cellulaire, le dit système comprenant un réseau fixe (2) avec des stations de base, dans lequel une station de base est prévue pour transmettre des données sur une porteuse de diffusion à l'intérieur d'une cellule pour réception par toutes les stations mobiles (4) dans la dite cellule, comprenant :
- un dispositif de codage (1) prévu pour coder dans le réseau fixe des données spécifiques d'abonné par une clé symétrique à un code (CW) ;
- un dispositif de décodage (3) prévu pour décoder des données codées spécifiques d'abonné par la dite clé symétrique dans une station mobile appartenant à un abonné du dit service de diffusion, et
- un dispositif de transmission de données prévu pour transmission de données codées spécifiques d'abonné à partir du réseau fixe dans des cellules sélectives sur un canal de données sur la dite porteuse de diffusion,
**caractérisé en ce que** le dit dispositif de transmission de données est prévu pour transmettre les données codées spécifiques d'abonné seulement dans les cellules qui couvrent une zone géographique dans laquelle les données sont pertinentes,
- **en ce qu'**un premier dispositif de cryptage (5) est prévu pour crypter des clés à des codes par une première clé de cryptage (PDK) dans le réseau fixe ;
- **en ce qu'**un premier dispositif de transmission pour données de commande est prévu pour transmission de clés cryptées à partir du réseau fixe (2) sur un premier canal de données de commande sur la dite porteuse de diffusion ;
- **en ce qu'**un premier dispositif de décryptage (6) est prévu pour décrypter les clés cryptées dans la station mobile (4) de l'abonné ;
- **en ce que** le dit premier dispositif de cryptage (5) est prévu pour le cryptage d'informations (P) relatives à la façon dont la dite clé symétrique cryptée doit être utilisée ;
- **en ce que** le dit premier dispositif de transmission pour données de commande est prévu pour transmission des informations cryptées relatives à la façon dont la dite clé symétrique cryptée doit être utilisée sur le premier canal de données de commande ;
- **en ce qu'**un deuxième dispositif de cryptage (7) est prévu pour le cryptage, par la première clé de cryptage, d'informations de droits (E) dans le réseau fixe ;
- **en ce qu'**un deuxième dispositif de transmission pour données de commande est prévu pour la transmission des informations de droits cryptées à partir du réseau fixe sur un deuxième canal de données de commande sur la dite porteuse de diffusion
- **en ce qu'**un deuxième dispositif de décryptage (8) est prévu pour décrypter les informations de droits cryptées dans la station mobile de l'abonné ;
- **en ce qu'**un troisième dispositif de cryptage (7') est prévu pour crypter la dite première clé de cryptage par une deuxième clé de cryptage (1K) ;
- **en ce qu'**un troisième dispositif de transmission pour données de commande est prévu pour transmission de la dite première clé de cryptage cryptée à partir du réseau fixe sur un troisième canal de données de commande sur la dite porteuse de diffusion ; et
- **en ce qu'**un troisième dispositif de décryptage (8') est prévu pour décrypter la dite première clé de cryptage cryptée dans la station mobile de l'abonné.

2. Agencement selon la revendication 1, **caractérisé en ce que** le dit dispositif de transmission de données est prévu pour la transmission de données codées spécifiques d'abonné seulement dans des cellules qui sont déterminées à l'avance par le dit abonnement au service de diffusion.

3. Agencement selon la revendication 1, **caractérisé en ce que** les dits deuxième et troisième dispositifs de transmission sont prévus pour transmettre des informations d'adresse (UA) relatives aux stations mobiles des abonnés de réception.

4. Agencement selon la revendication 1 ou 3, **caractérisé par** un dispositif de stockage d'informations (9) prévu dans la station mobile d'abonné (4), pouvant stocker les dites informations relatives à la façon dont la dite clé symétrique doit être utilisée, et les dites informations de droits.

5. Agencement selon la revendication 4, **caractérisé par** un dispositif ide stockage (9) prévu dans la station mobile d'abonné (4) et pouvant stocker la dite clé.

6. Agencement selon la revendication 5, **caractérisé par** un dispositif de stockage de clé de cryptage, prévu dans la station mobile d'abonné (4), prévu pour stocker la dite première clé de cryptage.

7. Procédé d'abonnement à un service de diffusion dans un système de radiocommunication cellulaire, dans lequel un réseau fixe (2) comprend des stations de base et une station de base transmet des données sur une porteuse de diffusion dans une cellule, ces données étant reçues par toutes les stations mobiles (4) dans la dite cellule, dans lequel :
- des donnes spécifiques d'abonné sont codées (1) dans le réseau fixe par une clé symétrique à un code (CW) ;
- les dites données codées spécifiques d'abonné sont décodées (3) dans une station mobile d'abonné par la dite clé symétrique à un code ;
**caractérisé par** les étapes suivantes :
- transmission des données codées spécifiques d'abonné sur un canal de données sur la dite porteuse de diffusion seulement dans les cellules qui couvrent une zone géographique dans laquelle les données sont pertinentes;
- cryptage (ECM) de clés en codes par une première clé de cryptage (PDK) dans le réseau fixe (2) ;
- transmission des clés cryptées à partir du réseau fixe sur un premier canal de données de commande sur la dite porteuse de diffusion ;
- décryptage des clés cryptées (6) dans la station mobile d'abonné (4) ;
- cryptage (ECM) d'informations (P) relatives à la façon dont la dite clé symétrique doit être utilisée ;
- transmission des dites information cryptées relatives à la façon dont la dite clé symétrique doit être utilisée sur le dit premier canal de données de commande ;
- cryptage (EMM) d'informations de droits (E) par la première clé de cryptage dans le réseau fixe ;
- transmission des informations de droits cryptées à partir du réseau fixe sur un deuxième canal de données de commande sur la dite porteuse de diffusion ;
- décryptage (EMM) des dites informations de droits cryptées dans la station mobile d'abonné ;
- cryptage (EMM) de la dite première clé de cryptage par une deuxième clé de cryptage (IK) ;
- transmission de la dite première clé de cryptage cryptée à partir du réseau fixe sur un troisième canal de données de commande sur la dite porteuse de diffusion ; et
- décryptage (EMM) de la dite première clé de cryptage cryptée dans la station mobile d'abonné.

8. Procédé selon la revendication 7, **caractérisé en ce qu'**il comprend:
- la transmission des dites données codées spécifiques d'abonné seulement dans des cellules qui sont déterminées à l'avance par le dit abonnement au service de diffusion.

9. Procédé selon la revendication 7, **caractérisé par** l'étape de :
- transmission à partir du réseau fixe d'informations d'adresse (UA) relatives aux stations mobiles (4) des abonnés de réception .

10. Procédé selon la revendication 7 ou 9, **caractérisé par** l'étape de:
- stockage (9) des dites informations relatives à la façon dont la dite clé symétrique doit être utilisée, et des dites informations de droits dans la station mobile d'abonné (4).

11. Procédé selon la revendication 10, **caractérisé par** l'étape de :
- stockage de la dite clé dans la station mobile d'abonné.

12. Procédé selon la revendication 11, **caractérisé par** l'étape de :
- stockage de la dite première clé de cryptage dans la station mobile d'abonné (4).
